# EUROPÄISCHE PATENTSCHRIFT

(11) **EP 1 039 603 B1**
(45) Veröffentlichungstag und Bekanntmachung des Hinweises auf die Patenterteilung: **27.04.2011**
(21) Anmeldenummer: 00105902.1
(22) Anmeldetag: 22.03.2000
(51) Int. Cl.: H02B 1/04

(54) **Halterung für einen Modul**
Mounting bracket for modular apparatus
Platine de montage pour un module

(30) Priorität: 23.03.1999 AT 53099
(43) Veröffentlichungstag der Anmeldung: 27.09.2000
(73) Patentinhaber: Vaillant GmbH, 42859 Remscheid (DE)
(72) Erfinder: Riecke, Harald, 42853 Remscheid (DE)
(74) Vertreter: Hocker, Thomas

(56) Entgegenhaltungen:
- US-A- 3 758 828

## Beschreibung

Die Erfindung bezieht sich auf eine Halterung gemäß dem Oberbegriff des Anspruches 1.

Bei bekannten derartigen Halterungen ist der Modul mit Ansätzen versehen, die von Befestigungsschrauben durchsetzt sind, die in den Rahmen eingreifen. Dabei ergibt sich jedoch der Nachteil, daß der entsprechende Modul, bzw. dessen Laschen, auf den Rahmen des jeweiligen Gerätes abgestimmt werden mußte. Dadurch ergibt sich eine entsprechend aufwendige Lagerhaltung. So müssen z.B. Transformatoren, die an sich für eine Reihe verschiedener Typen von Geräten verwendet werden könnten, mit unterschiedlichen Laschen versehen werden, um in diesen Geräten montiert werden zu können.

Aus der US 3 758 828 A ist eine Halterung für einen Transformator bekannt, bei welcher der Transformator mittels Bolzen auf einer Leiste, welche wiederum mit einer Rückwand verbunden ist, befestigt ist. Dementsprechend ist zur Befestigung die Fixierung mehrerer Befestigungsmittel mittels Werkzeug notwendig.

Ziel der Erfindung ist es, die Nachteile des Standes der Technik zu vermeiden und eine Halterung der eingangs erwähnten Art vorzuschlagen, bei dem Module auf einfache Weise montiert werden können.

Erfindungsgemäß wird dies bei einer Halterung der eingangs erwähnten Art durch die kennzeichnenden Merkmale des Anspruches 1 erreicht.

Durch die vorgeschlagenen Maßnahmen ist es möglich, einen Modul, z.B. einen Transformator, ohne irgendwelche Montageeinrichtungen, wie z.B. Laschen, zu montieren. Dazu genügt es, den Modul in die Aufnahme einzuschieben und das Schließblech in die Durchbrüche des aufgebogenen Bereichs der Aufnahme einzustecken und mit der Aufnahme zu verbinden.

Dadurch ist der Modul sicher in der Aufnahme gehalten, wobei durch die seitlichen Laschen die Lage des Moduls fixiert ist und die Aufnahme in Verbindung mit dem Schließblech den Modul umschließt, wodurch eine sichere Verbindung mit dem Rahmen gegeben ist. Dabei ist die Befestigung des Moduls mit der vorgeschlagenen Halterung auch für Falltests geeignet.

Durch die in die Durchbrüche der Aufnahme einhängbaren Vorsprünge kann das Schließblech sehr einfach und rasch montiert werden. Es ergibt sich eine sehr einfache konstruktive Lösung, wobei sich für das Schließblech eine ausreichende Anlagefläche ergibt.

Die Verbindungsleitungen können von den Klemmen zum Modul in den durch die sägezahnförmige Ausbildung bedingten Freiraum auch dann sehr einfach verlegt werden, wenn das Schließblech unter mechanischer Vorspanung abschnittweise an dem Modul anliegt.

Durch die Merkmale des Anspruches 2 ergibt sich der Vorteil, daß ein Schutz der Klemmen gegen Tropfwasser gegeben ist. Dies ist insbesondere bei Wasserheizgeräten von Vorteil, bei denen es im Bereich der Kaltwasserzuleitungen zur Bildung von Kondenswasser kommen kann. Durch die Abwinkelung des Schließblechs kann der Modul auch in von Kondenswasser beeinträchtigten Bereichen des Gerätes angeordnet werden.

Die Erfindung wird nun anhand der Zeichnung näher erläutert. Dabei zeigen:
Fig. 1 eine axonometrische Darstellung einer erfindungsgemäßen Halterung,

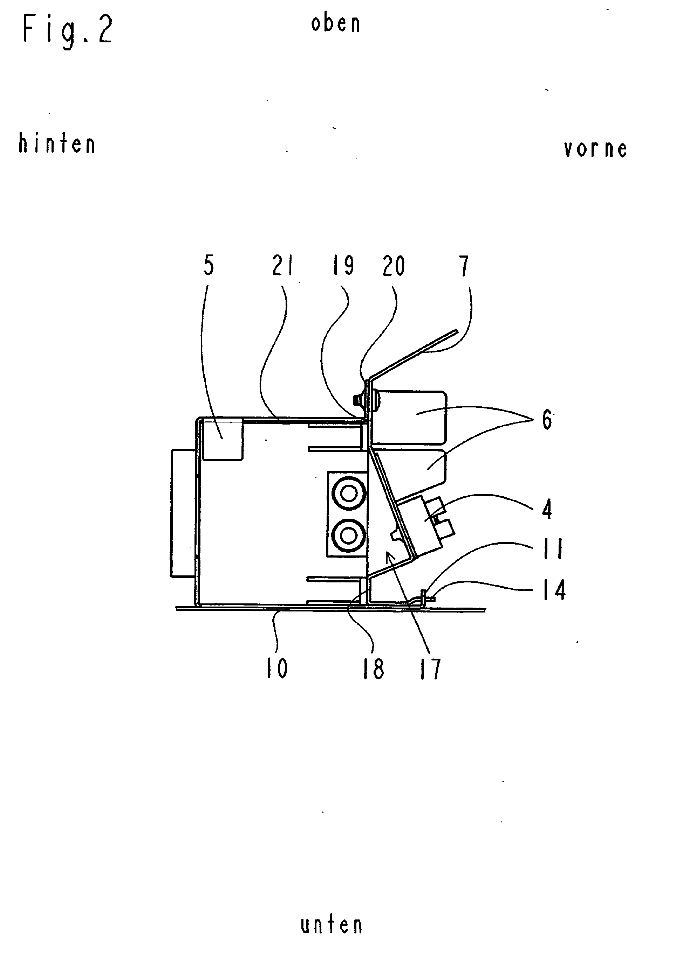

Fig. 2 eine Seitenansicht der Halterung,
Fig. 3 eine axonometrische Darstellung der Aufnahme,
Fig. 4 eine axonometrische Darstellung des Schließbleches und
Fig. 5 eine weitere axonometrische Darstellung der Halterung mit Modul.

Gleiche Bezugszeichen bedeuten in allen Figuren gleiche Einzelteile.

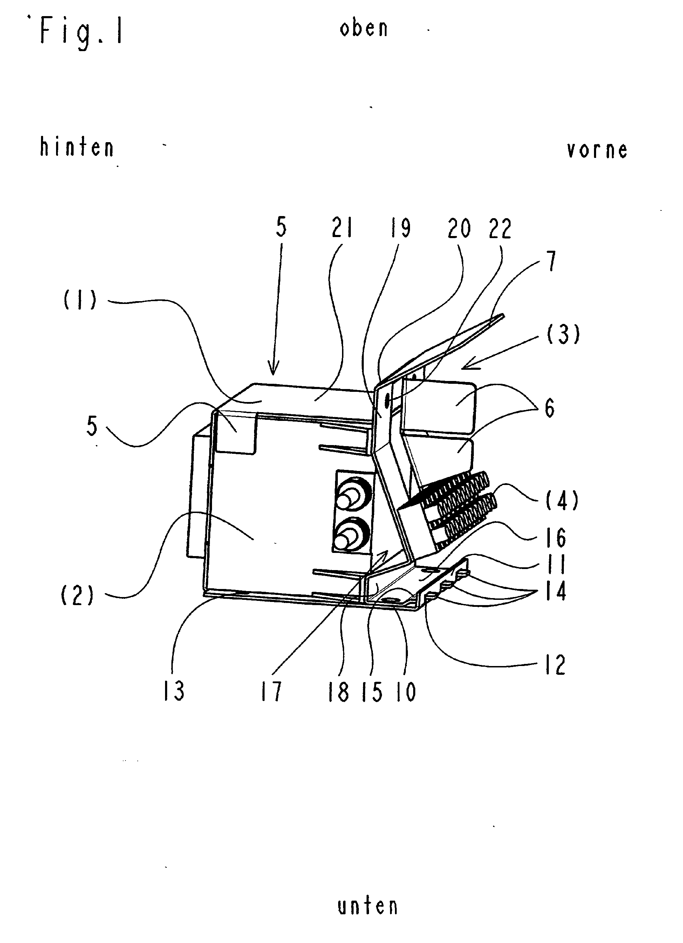

Die Fig. 1 zeigt eine Aufnahme 1, die einen im wesentlichen U-förmigen Querschnitt aufweist. Dabei ist ein Schenkel 10 mit einem nach oben abgewinkelten Randbereich 11 versehen, wobei dieser Schenkel 10 über den aufzunehmenden Modul, z.B. einen Transformator 2, nach vorne vorragt. Dieser Schenkel 10 ist mit Bohrungen 13 versehen, die zur Aufnahme von Befestigungsschrauben zur Verbindung mit einem nicht dargestellten Rahmen dienen.

Der abgewinkelte Randbereich 11 des Schenkels 10 ist mit Durchbrüchen 12 versehen. Diese dienen zur Aufnahme von Vorsprüngen 14, die von einem abgekröpften Randbereich 15 eines Schenkels 16 eines Schließblechs 3 abstehen.

Dieses Schließblech 3 weist einen im Querschnitt sägezahnförmigen Abschnitt 17 auf, auf dessen Außenseite Klemmen 4 für den elektrischen Anschluß des Gerätes montiert sind. Dieser sägezahnförmige Abschnitt 17 ist zwischen zwei Abschnitten 18, 19 angeordnet, die beide im wesentlichen senkrecht zum Schenkel 16 des Schließbleches 3 verlaufen.

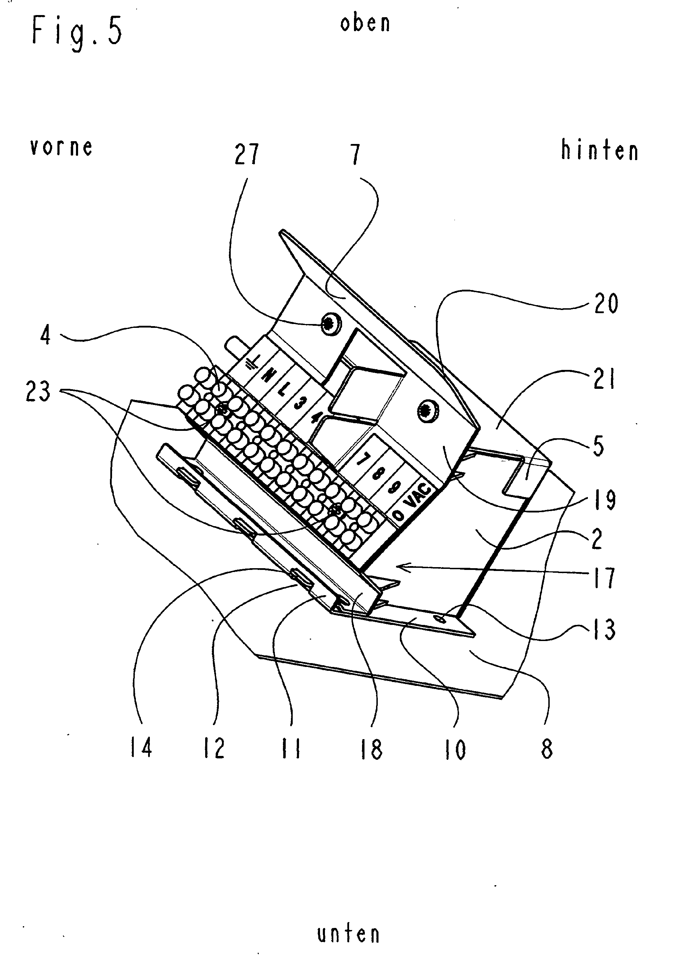

Dabei liegt der Abschnitt 19 an einem abgewinkelten Randbereich 20 des zweiten Schenkels 21 der Aufnahme 1 an. Zur Befestigung des Schließbleches 3 ist dieses im Bereich des Abschnittes 19 des Schließbleches mit Bohrungen 22 versehen, die zur Aufnahme von Schrauben 27 (Fig. 5) dienen, die in den abgewinkelten Randbereich 20 der Aufnahme 1 in ein Gewinde 26 eingeschraubt werden.

Das Schließblech 3 weist oberhalb der Klemmen 4 ausgebogene Zungen 6 auf, die für eine getrennte Führung von elektrischen Leitungen mit unterschiedlichem Spannungsniveau dienen. Weiter weist das Schließblech 3 eine von der Aufnahme 1 weggerichtet Abwinkelung 7 auf, die als Tropfwasserschutz für die Klemmen 4 dient und diese überdeckt.

Zur seitlichen Führung des Moduls 2 ist der Schenkel 21 der Aufnahme 1 mit seitlichen Laschen 5 versehen.

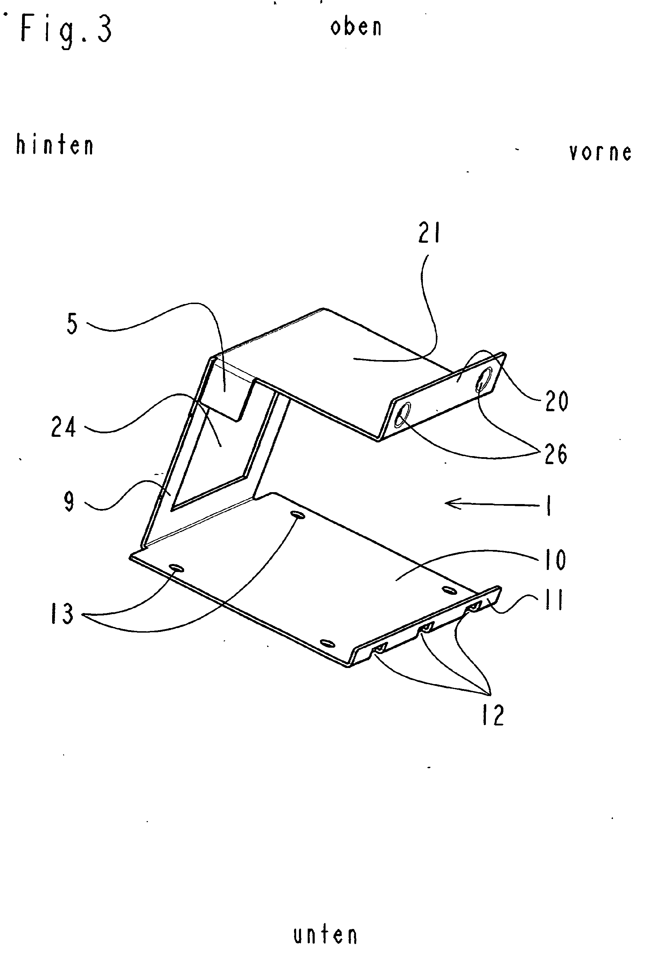

Wie aus der Fig. 3 zu ersehen ist weist der Steg 9 der Aufnahme 1 einen Durchbruch 24 auf, der zur Aufnahme eines abgesetzten Abschnittes des Moduls 2 dient.

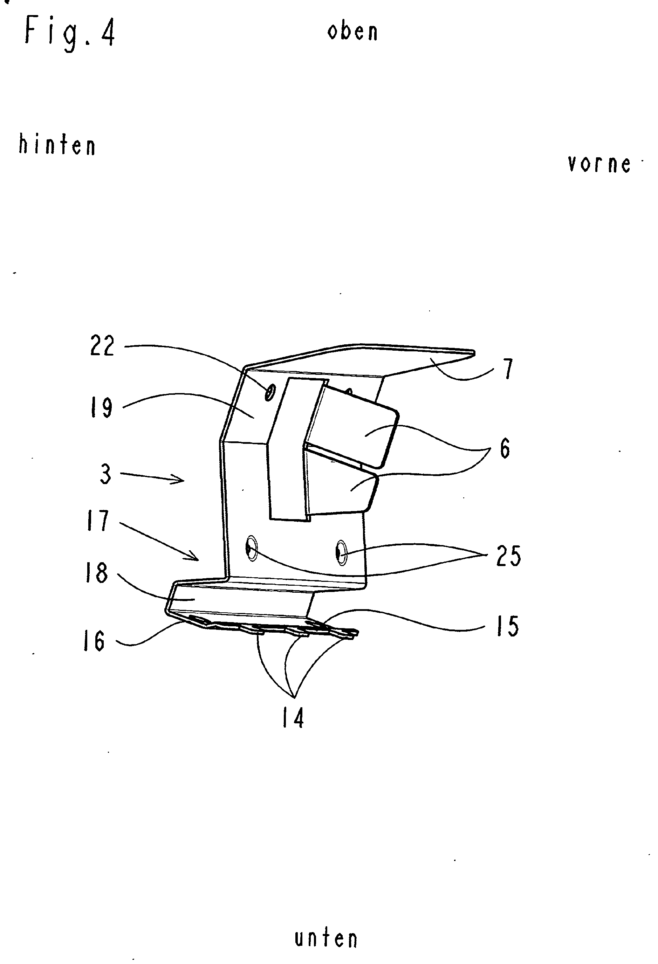

Wie aus der Fig. 4 zu ersehen ist, sind im Bereich des sägezahnförmigen Abschnittes 17 des Schließblechs 3 Gewinde zur Aufnahme von Schrauben 23 (Fig. 5) für die Befestigung der Klemmen 4 vorgesehen. Diese werden in die Gewinde 25 eingeschraubt.

Zur Montage eines Moduls 2 wird dieser in die mit einem Rahmen 8 (Fig. 5) verschraubte Aufnahme 1 eingeschoben. Danach wird das Schließblech 3 mit den Vorsprüngen 14 in die Durchbrüche 12 eingehängt und an den abgewinkelten Randbereich 20 des Schenkels 21 der Aufnahme 1 angelegt und mit diesem mittels Schrauben 27 verbunden. Dadurch wird gleichzeitig der Modul 2 gegen ein Herausrutschen aus der Aufnahme 1 gesichert.

Dabei kann auch vorgesehen sein, daß das Schließblech 3 mit seinem Abschnitt 18 und 19 gegen den Modul 2 drückt und diesen gegen den Steg 9 der Aufnahme 1 preßt. Dabei wirkt der sägezahnförmige Abschnitt 17 ähnlich einer Feder und erlaubt eine elastische Verformung des Schließblechs 3.

## Patentansprüche

1. Halterung für einen Modul (2), insbesondere einem Transformator, in einem einen Rahmen (8) aufweisenden Gerät, **dadurch gekennzeichnet, daß** die Halterung eine im wesentlichen U-förmige Aufnahme (1) aufweist, die an dem Rahmen (8) befestigt ist und deren einer Schenkel (10) aufgebogen ist und im aufgebogenen Bereich (11) mit Durchbrüchen (12) versehen ist, in die Vorsprünge (14) eines Schließblechs (3) eingreifen, die von einem abgekröpften Randbereich (15) eines abgewinkelten Schenkels (16) des Schließblechs (3) abstehen, daß das Schließblech (3) mit der Aufnahme (1) lösbar verbunden ist , daß seitliche Laschen (5) zur seitlichen Abstützung des Moduls (2) vorgesehen sind, daß der zweite Schenkel (21) der Aufnahme (1) einen vom ersten Schenkel (10) weggebogenen Randbereich (20) aufweist, an dem das Schließblech (3) anliegt und mittels Schrauben (27) befestigt ist, daß das Schließblech (3) einen im Querschnitt sägezahnförmigen Abschnitt (17) aufweist, der eine elastische Verformung des Schließblechs (3) erlaubt und daß das Schließblech (3) derart ausgebildet ist, daß es im montierten Zustand gegen den Modul (2) drückt und diesen gegen den Steg (9) der Aufnahme (1) presst.

2. Halterung nach Anspruch 1 **dadurch gekennzeichnet, daß** das Schließblech (3) oberhalb seines an dem abgewinkelten Bereich (20) des zweiten Schenkels (21) der Aufnahme (1) anliegenden Bereiches eine von der Aufnahme (1) weggerichtete Abwinkelung (7) aufweist, die die Klemme (4) überdeckt.

## Claims

1. A mounting bracket for a module (2), in particular a transformer, disposed in an apparatus comprising a frame (8), **characterised in that** such mounting bracket comprises a substantially U-shaped holder (1) which is attached to the frame (8) and whose one side plate (10) is bent up and in the bent up portion (11) thereof is provided with openings (12) engaged by the projections (14) of a closing member (3) which project from a bent off end section (15) of angled side plate (16) of the closing member (3), that the closing member (3) is detachably connected with the holder (1), that lateral retaining flaps (5) for lateral support of the module (2) are provided, that the second side plate (21) of the holder (1) comprises an end section (20) bent away from the first end plate (10), on which the closing member (3) abuts and is fitted thereto by means of screws (27), that the closing member (3) comprises a cross-sectionally saw tooth-shaped section (17) which permits elastic deformation of the closing member (3), and that the closing member (3) is disposed in such a manner that in assembled condition it exerts pressure against the module (2), thus urging the latter against the web (9) of the holder (1).

2. A mounting bracket as claimed in Claim 1 **characterised in that** the closing member (3), in the area above the section abutting on the angled section (20) of the second side plate (21) of the holder (1), comprises an angled end plate (7) bent in a direction away from the holder (1), which end plate covers the terminal strip (4)

## Revendications

1. Dispositif de fixation pour un module (2), notamment un transformateur, dans un appareil présentant un châssis (8), **caractérisé en ce que** le dispositif de fixation présente un logement essentiellement en forme de U (1) qui est fixé au châssis (8) et dont une branche (10) est dépliée et est pourvue d'ajours (12) dans la région dépliée (11) dans lesquels des saillies (14) d'une tôle de fermeture (3) s'engrènent, lesquelles dépassent d'une région de bordure coudée (15) d'une branche pliée en U (16) de la tôle de fermeture (3), que la tôle de fermeture (3) est reliée de manière amovible au logement (1), que des languettes latérales (5) sont prévues pour le soutien latéral du module (2), que la seconde branche (21) du logement (1) présente une région de bordure (20) courbée à l'écart de la première branche (10), région contre laquelle repose la tôle de fermeture (3) et à laquelle elle est fixée au moyen de vis (27), que la tôle de fermeture (3) présente une section (17) en forme de dents de scie en coupe transversale qui permet une déformation élastique de la tôle de fermeture (3) et que la tôle de fermeture (3) est réalisée de sorte qu'elle appuie à l'état monté contre le module (2) et presse celui-ci contre la traverse (9) du logement (1).

2. Dispositif de fixation selon la revendication 1, **caractérisé en ce que** la tôle de fermeture (3) présente un coude (7) orienté à l'écart du logement (1) au-dessus de sa région reposant contre la région pliée en U (20) de la seconde branche (21 ) du logement (1), coude qui recouvre la borne de connexion (4).
